# FASCICULE DE BREVET EUROPEEN

(11) **EP 2 324 387 B1**
(45) Date de publication et mention de la délivrance du brevet: **13.11.2013**
(21) Numéro de dépôt: 09736248.7
(22) Date de dépôt: 12.08.2009
(51) Int. Cl.: G02B 26/08, G02B 26/06

(54) **MIROIR DEFORMABLE A ACTIONNEURS DE FORCE ET RAIDEUR REPARTIE**
DEFORMIERBARER SPIEGEL MIT KRAFTSTELLGLIEDERN UND VERTEILTER STEIFIGKEIT
DEFORMABLE MIRROR WITH FORCE ACTUATORS AND DISTRIBUTED STIFFNESS

(30) Priorité: 14.08.2008 FR 0855579
(43) Date de publication de la demande: 25.05.2011
(73) Titulaire: Alpao, 38330 Montbonnot-Saint-Martin (FR)
(72) Inventeur: CAMET, Sébastien, F-38240 Meylan (FR); CURIS, Jean-François, F-38420 Domene (FR); ROOMS, Frédéric, F-38330 Biviers (FR)
(74) Mandataire: Martin, Didier Roland Valéry
(86) Numéro de dépôt international: PCT/FR2009/001000
(87) Numéro de publication internationale: WO 2010/018326

(56) Documents cités:
- FR-A- 2 876 460
- FR-A- 2 923 301
- US-A1- 2005 030 438
- US-A1- 2007 286 035
- HAMELINCK R ET AL: "Large adaptive deformable membrane mirror with high actuator density" 1 octobre 2004 (2004-10-01), PROCEEDINGS OF THE SPIE, SPIE, BELLINGHAM, VA; US, PAGE(S) 1482 - 1492 , XP002330992 ISSN: 0277-786X abrégé page 1486 figure 4.1

## Description

La présente invention concerne un miroir déformable à actionneurs de force et raideur répartie.

### DOMAINE TECHNIQUE

La présente invention concerne le domaine des miroirs déformables comportant une membrane réfléchissante et des actionneurs de force.

Elle se rapporte plus particulièrement à un miroir déformable comprenant une membrane déformable avec une face extérieure réfléchissante et une face opposée, une plaque rigide de support et au moins un actionneur de force. Chaque actionneur comprend au moins deux éléments aptes à interagir entre eux à distance pour générer une force dans une direction sensiblement perpendiculaire à la surface de la membrane initialement non déformée et aptes à se déplacer l'un par rapport à l'autre suivant la direction de cette force générée de sorte à provoquer la déformation locale de la membrane. L'un des deux éléments est intégré à la plaque de support et l'autre est couplé à la membrane. L'un de ces deux éléments est apte à contrôler l'intensité de la force générée.

### ÉTAT DE LA TECHNIQUE ANTERIEURE

On entendra par actionneur de force dans le présent brevet un actionneur pour lequel c'est la force créée par l'actionneur qui est contrôlable et non le déplacement d'un élément de cet actionneur. Dans le cas par exemple d'un actionneur constitué d'un électro-aimant et d'un aimant permanent, celui-ci sera qualifié d'actionneur de force dès lors que c'est le contrôle de la force magnétique créée qui commande l'amplitude du déplacement de l'aimant pour déformer la membrane : lorsque plus aucune force n'est appliquée, l'aimant revient à sa position initiale et la membrane n'est plus déformée. Il sera par contre qualifié d'actionneur de déplacement dès lors que c'est la position d'un élément (par exemple un actionneur basé sur la variation de longueur d'un élément piézo-électrique) apte à se déplacer qui est directement commandée : lorsque l'on arrête d'appliquer la force, l'actionneur reste dans la même position. Ces deux types d'actionneurs ne sont pas équivalents, du fait notamment que la relation entre le déplacement et la force créée n'est pas nécessairement linéaire, bien que les actionneurs soient généralement dimensionnés pour que cette relation soit la plus linéaire possible.

Par ailleurs, les termes "liaison souple" et "liaison rigide" utilisés dans le présent brevet désigneront respectivement des première et deuxième liaisons présentant des première et deuxième raideurs respectives, dont la deuxième est supérieure à la première. A titre purement indicatif, une liaison souple présentera typiquement une élongation au moins égale à un seuil compris entre 15 et 25 nanomètres sous l'action d'une force égale à la force moyenne développée par un actionneur, ce déplacement correspondant à celui qui est observable dans l'état de la technique des capteurs de front d'onde, alors qu'une liaison rigide présentera typiquement une élongation inférieure à ce seuil pour la même force.

Le principe général de tels miroirs déformables est connu de l'état de la technique. Les miroirs déformables dont la membrane réfléchissante est seulement suspendue sur les bords ont généralement une raideur faible. En effet, la raideur doit être compatible avec la force que l'actionneur de force est capable de générer afin d'engendrer une déformation suffisante. Leur membrane étant suspendue sur les bords, ces miroirs présentent une fréquence de résonance qui baisse lorsque le diamètre de la membrane augmente, ce qui rend impossible la réalisation de miroirs déformables disposant à la fois d'une réponse fréquentielle et d'un diamètre élevés. Le problème technique général que posent ces miroirs consiste donc à augmenter ou répartir leur raideur de sorte à augmenter leur réponse fréquentielle. L'augmentation de la raideur de la membrane reste toutefois limitée par la capacité de déformation des actionneurs de force.

Un exemple de miroir déformable à raideur non répartie est décrit dans le document de brevet FR 2 876 460. Dans ce document, un miroir déformable comprend une membrane déformable présentant une face extérieure réfléchissante et une face intérieure sur laquelle est fixée une pluralité d'aimants permanents. Un boîtier comportant des électro-aimants est placé en regard des aimants permanents pour exercer sur ces derniers une force électromagnétique provoquant un déplacement local de la zone correspondante de la membrane déformable. L'association d'un aimant permanent et d'un électro-aimant correspond à un actionneur de force de type électromagnétique. Afin d'éviter les phénomènes d'empreinte sur la membrane, la face intérieure est recouverte d'une couche uniforme faite d'un matériau souple.

L'inconvénient d'un tel miroir réside, d'une part, dans le fait que la couche de matériau souple, si elle réduit les phénomènes d'empreinte, ne permet pas de répartir la raideur de la membrane. Ainsi une déformation locale de la membrane n'est pas retranscrite de manière suffisamment localisée. Un autre inconvénient vient du fait que cette couche de matériau souple est placée très près des électro-aimants. Cette couche et la surface extérieure réfléchissante de la membrane seront donc inévitablement déformées par dilatation thermique du fait de l'émission de chaleur provoquée par les électro-aimants.

Une première solution pour répartir la raideur est proposée dans le document de brevet WO 2005/050283. Dans ce document, un miroir déformable comprend une membrane déformable, une maille d'actionneurs située en face de la face opposée de la membrane et une maille de connexions actionnantes. Chaque connexion actionnante est couplée à une surface actionnante respectivement d'un des actionneurs de la maille et respectivement d'un point de la seconde surface opposée à la surface actionnante. Chaque connexion actionnante présente une rigidité anisotropique et transmet un mouvement perpendiculaire à la seconde surface. Les actionneurs sont constitués d'aimants permanents et d'électro-aimants. La membrane déformable est liée par des tiges rigides à une membrane magnétisable. Lorsque l'électro-aimant fonctionne, l'aimant permanent - sans se déplacer - exerce localement une force magnétique sur la membrane magnétisable, ce qui provoque la déformation locale de cette dernière. Cette déformation locale est retransmise à la membrane réfléchissante par l'intermédiaire des tiges rigides. Des éléments mécaniques permettent de fermer le champ magnétique créé par chaque actionneur.

L'inconvénient d'un tel miroir réside dans sa complexité de réalisation, du fait des nombreuses pièces mécaniques à assembler, ce qui implique de fortes tolérances mécaniques. Par ailleurs, l'aimant permanent ne provoque pas mécaniquement (par son déplacement propre) mais magnétiquement (sans se déplacer) la déformation locale d'une membrane intermédiaire magnétisable. Cela suppose de disposer d'une membrane magnétisable, ce qui peut être contraignant lorsqu'il s'agit de trouver le matériau magnétisable adéquat. Enfin, les électro-aimants sont disposés très près du reste de la structure, ce qui, d'une part, peut provoquer des dilatations thermiques du fait de l'émission de chaleur par les électro-aimants et, d'autre part, rend impossible une intervention de réparation sur un électro-aimant sans abîmer les membranes.

Une deuxième solution pour répartir la raideur est décrite dans le document de brevet FR 07/07719. Dans ce document, un miroir déformable comprend une membrane déformable avec une face réfléchissante et une face opposée, une plaque rigide et une structure d'actionneurs fixés à la plaque rigide et aptes à déformer localement la membrane. Le miroir comprend également une couche adhésive contre la face opposée de la membrane, ainsi qu'une structure de moyens de couplage souple. Chaque moyen de couplage souple comprend un moyen de connexion mécanique, un moyen de liaison supérieure couplant l'extrémité supérieure du moyen de connexion mécanique à la couche adhésive, et un moyen de liaison inférieure couplant l'extrémité inférieure du moyen de connexion mécanique à la plaque rigide. Le moyen de couplage mécanique peut être par exemple une tige. Cette configuration fondée sur une structure souple offre une répartition de la raideur de la membrane sur l'ensemble de sa surface, tout en permettant un assemblage simple de tous les éléments constitutifs du miroir et en réduisant les exigences de tolérance mécanique au niveau des actionneurs.

Néanmoins, dans le cas d'actionneurs de force de type électromagnétique, cette solution présente l'inconvénient de rendre difficile la réduction du pas entre les actionneurs de force, du fait de la grande taille des tiges ainsi que des usinages supplémentaires qui sont nécessaires. De plus, le boîtier dans lequel sont enfermés tous ces éléments est impossible à ouvrir en vue de procéder à une réparation - par exemple un remplacement d'une bobine - sans abîmer la membrane. Enfin, les électro-aimants sont disposés très près des couches de colle souple et des moyens de liaison constitués par des colles. Ceux-ci sont donc amenés à se dilater de manière non maîtrisable sous l'effet du réchauffement thermique provoqué par le fonctionnement des électro-aimants.

La demande de brevet US 2007/0286035 décrit par ailleurs un dispositif à miroir déformable conforme au préambule de la revendication 1, ce dispositif n'étant toutefois pas doté de moyens permettant un contrôle complexe de sa surface.

On connait également par le document D1 : US - 2007/0286035 des miroirs déformables utilisant un circuit réfrigérant pour évacuer la chaleur produite par les actionneurs déformant le miroir.

On connait enfin par D2 : "Large adaptive deformable membrane mirror with high actuator density" (R. Hamelinck) des miroirs déformables dont la membrane est séparée des actionneurs par de fines tiges.

Ainsi, aucune solution de l'état de la technique ne permet de disposer d'un miroir déformable à actionneurs de force, dont la raideur soit suffisamment répartie lors d'une déformation locale, sur lequel une intervention de réparation soit rendue suffisamment simple et peu coûteuse et pour lequel la distance entre les actionneurs puisse être réduite de manière significative.

### OBJET DE L'INVENTION

Le but de la présente invention comme définit par la revendication 1 est de remédier à ce problème technique, en utilisant, en plus de la membrane déformable réfléchissante et de la plaque de support, une structure à double étage dont le deuxième étage comprend des moyens de référence. Chaque actionneur de force comporte un élément de commande (par exemple un électro-aimant) et un élément d'interaction (par exemple un aimant permanent) avec l'élément de commande. Un premier étage est composé d'une combinaison d'éléments de commande ou d'interaction, de moyens de liaison souple et rigide dont une partie est reliée à la membrane déformable. Un deuxième étage d'éléments de commande ou d'interaction permet le contrôle du déplacement relatif de ces deux éléments et d'entraîner ainsi la déformation locale de la membrane.

L'approche de la solution a consisté à chercher un moyen de contrôler les déformations locales de la membrane (le mouvement des éléments de commande ou d'interaction est intégralement transformé en déformation locale à la membrane) et de les réaliser avec une raideur suffisamment répartie. Il est alors apparu qu'une structure à double étage, combinant les actionneurs de force avec des moyens de liaison rigide et souple, pourrait permettre la création de mini membranes secondaires au niveau des éléments de déformation. Ces mini membranes seraient reliées à la membrane réfléchissante par des moyens de liaison rigide pour transmettre intégralement une déformation à la membrane réfléchissante tout en répartissant la raideur du miroir.

Dans ce but, l'invention a pour objet un miroir déformable comprenant une membrane déformable avec une face extérieure réfléchissante et une face opposée, une plaque rigide de support et au moins un actionneur de force. Chaque actionneur comprend au moins deux éléments aptes à interagir entre eux à distance pour générer une force dans une direction sensiblement perpendiculaire à la surface de la membrane initialement non déformée et aptes à se déplacer l'un par rapport à l'autre suivant la direction de cette force générée de sorte à provoquer la déformation locale de la membrane. L'un des deux éléments est intégré à la plaque de support et l'autre est couplé à la membrane. L'un de ces deux éléments est apte à contrôler l'intensité de la force générée. Selon l'invention, le miroir comprend également des moyens de référence couplés à la membrane par une pluralité de liaisons comprenant chacune au moins un moyen de liaison rigide et au moins un moyen de liaison souple. Chaque moyen de liaison rigide est lié à la membrane, chaque moyen de liaison souple est au moins en partie lié aux moyens de référence, et les moyens de référence étant communs à la pluralité de liaisons.

On dira dans le présent brevet que deux éléments sont couplés lorsque ceux-ci sont reliés l'un à l'autre non nécessairement de manière directe mais éventuellement par l'intermédiaire d'autres éléments. On dira que deux éléments sont liés lorsque cette liaison est directe et sans aucun élément intermédiaire.

L'actionneur de force comporte un premier élément de commande apte à contrôler l'intensité de la force générée et un deuxième élément d'interaction apte à interagir à distance avec l'élément de commande pour générer cette force. La force résulte de l'interaction de ces deux éléments et n'existe pas sans leur présence mutuelle. L'un de ces deux éléments et solidement fixé à une plaque rigide tandis que l'autre est fixé à une surface souple, de sorte que la force générée n'entraîne le déplacement que de l'élément fixé à une surface souple. Ce dernier élément peut être l'élément de commande ou l'élément d'interaction selon différents mode de réalisation de l'invention.

Cette disposition permet de constituer pour chaque élément de déformation une mini membrane secondaire constituée par la limitation des moyens de liaison souple. Chaque mini membrane peut alors se déformer de manière quasi indépendante des autres, sous l'effet du déplacement d'un élément de l'actionneur de force associé. Cette déformation est intégralement transmise à la membrane réfléchissante par l'intermédiaire des moyens de liaison rigide.

Enfin, une telle disposition permet d'éloigner les différents éléments d'un actionneur de force au plus loin de la membrane. Cela permet d'éviter que des poussières attirées par les éléments de commande ou d'interaction - notamment dans le cas d'électro-aimants et d'aimants permanents - viennent se coller sur la membrane réfléchissante, ce qui entraînerait dans le cas contraire une diminution de la qualité optique du miroir.

L'élément de l'actionneur de force apte à contrôler l'intensité de la force générée est intégré à la plaque rigide de support. Dans ce cas, les éléments de commande sont éloignés du reste du miroir, ce qui permet d'éviter que leur fonctionnement ne provoque la dilatation thermique de certains autres éléments constitutifs du miroir.

Au moins un moyen de liaison rigide est fixé par une extrémité à la face opposée de membrane et par une autre extrémité aux moyens de référence. Ce type de liaison permet de disposer de moyens de liaison rigide en dehors de la zone utile - définie par les actionneurs - pour diminuer les dimensions de la zone utile au strict minimum, qui devient inférieure à la partie de la membrane réfléchissante suspendue.

Avantageusement, au moins un moyen de liaison rigide est fixé par une extrémité à la face opposée de la membrane et par une autre extrémité à un moyen de liaison souple. La raideur est ainsi mieux répartie en associant des moyens de liaison rigide et souple là où il n'y a pas forcément d'actionneurs.

Les moyens de référence comprennent une plaque de support intermédiaire disposée entre la membrane et la plaque de support. Le miroir comportant ainsi deux plaques de support, il est possible d'effectuer des opérations de maintenance sur un élément du miroir sans risquer d'endommager un autre élément, notamment une membrane fragile. En particulier, il sera possible de remplacer par exemple un seul actionneur sans endommager la membrane, ce qui nécessite malgré tout un minimum de précautions.

De manière préférentielle, la plaque de support intermédiaire comporte un ensemble d'ouvertures, au moins un actionneur de force étant couplé à au moins l'une de ces ouvertures. L'interaction - par exemple électromagnétique - est ainsi favorisée entre les deux éléments de l'actionneur de force, puisque les deux éléments de l'actionneur ne sont ainsi pas séparés par la plaque.

Dans le cas où la plaque de support intermédiaire présente au moins une ouverture, un moyen de liaison rigide est avantageusement disposé au niveau d'une ouverture et fixé par une extrémité à la face opposée de la membrane et par une autre extrémité à l'élément d'au moins un actionneur de force couplé à l'ouverture. L'élément de déformation est ainsi délocalisé par rapport à la membrane, les moyens de liaison rigide assurant la transformation intégrale du déplacement de l'élément de déformation en déformation locale de la membrane.

Dans ce dernier cas, selon un mode particulier de réalisation, au moins un moyen de liaison souple est disposé au niveau d'une ouverture et fixé à l'élément d'au moins un actionneur de force couplé à l'ouverture.

Selon un autre mode de réalisation, au moins un moyen de liaison souple est disposé au niveau d'une ouverture et fixé à au moins un moyen de liaison rigide. Cela permet de mieux répartir la raideur en dehors des zones où il n'y a pas d'actionneurs, y compris entre les actionneurs.

Selon un autre mode de réalisation, l'élément d'au moins un actionneur de force couplé à une ouverture est fixé à la face opposée de la membrane. On dispose ainsi de plusieurs actionneurs pour lesquels aucun moyen de liaison rigide n'est utilisé.

Avantageusement, au moins un moyen de liaison souple est disposé au niveau d'une ouverture et présente des dimensions supérieures à celles de l'ouverture. Cela permet de disposer d'une surface de contact suffisamment grande entre la plaque d'agencement et les moyens de liaison souple.

Avantageusement, au moins un élément d'au moins un actionneur de force couplé à une ouverture présente des dimensions inférieures à celles de l'ouverture. Cela permet d'améliorer l'interaction entre les deux éléments d'un actionneur de force et éventuellement de disposer l'élément à l'intérieur de l'ouverture.

Selon un mode particulier de réalisation, l'élément d'au moins un actionneur de force couplé à une ouverture et présentant des dimensions inférieures à celles de l'ouverture est disposé à l'intérieur de ladite ouverture.

Afin de s'assurer que l'interaction entre les éléments de commande et d'interaction est optimale, au moins un élément d'au moins un actionneur de force couplé à une ouverture et présentant des dimensions inférieures à celles de l'ouverture est disposé à l'extérieur de l'ouverture.

Avantageusement, les actionneurs de force sont disposés suivant une matrice uniformément répartie. Une disposition optimale des actionneurs peut ainsi être obtenue pour éviter des discontinuités dans l'influence de chaque actionneur sur la déformation.

Selon un mode particulier de mise en oeuvre, l'élément de l'actionneur de force apte à contrôler l'intensité de la force générée est un électro-aimant.

Selon un mode particulier de mise en oeuvre, l'élément de l'actionneur de force apte à interagir à distance avec l'élément apte à contrôler l'intensité de la force générée est un aimant permanent.

Selon un mode particulier de réalisation des moyens de liaison souple, les moyens de liaison souple comprennent au moins un film souple revêtu d'un matériau adhésif. Ce film souple réalise la fonction de liaison souple. Le matériau adhésif peut n'être disposé sur ce film qu'au niveau des zones où une fixation avec un autre élément doit être opéré.

Avantageusement, les moyens de liaison souple disposés d'un même côté des moyens de référence sont constitués d'un film souple couvrant l'ensemble de ces moyens de liaison souple. Cela évite d'avoir à faire plusieurs petits films, mais permet de mettre en commun une partie des moyens de liaison souple.

Avantageusement, les moyens de liaison rigide sont constitués de tiges rigides. Cela permet d'avoir un moyen de liaison simple, rigide et présentant deux extrémités pour associer la membrane à la plaque de support intermédiaire.

Avantageusement, les moyens de liaison rigide sont fixés à la face opposée de la membrane par des plots de colle souple dans une direction perpendiculaire à la force générée et rigide suivant la direction de ladite force générée. Ce plot de colle permet de conférer plusieurs degrés de liberté à l'interaction entre le moyen de liaison rigide et la membrane. Celle-ci ne se déforme pas dans la direction de la force mais seulement dans une direction perpendiculaire. Le mouvement de l'actionneur est ainsi intégralement transmis.

Avantageusement, tous les moyens de liaison rigide sont fixés à la face opposée de la membrane par un couche de colle souple dans une direction perpendiculaire à la force générée et rigide suivant la direction de ladite force générée, recouvrant la face opposée de la membrane, ce qui simplifie le collage des moyens de liaison rigide à la membrane.

Avantageusement, les moyens de liaison rigide sont fixés du côté opposé à la face opposé de la membrane par un plot de colle rigide. On assure ainsi la transmission intégrale du déplacement de l'élément de déformation pour déformer localement la membrane.

Aux fins de faciliter une intervention, de manière avantageuse, la plaque de support et la plaque de support intermédiaire sont mécaniquement désolidarisées. Une intervention est donc simplifiée sur les éléments de commande, ou même sur un autre élément constitutif du miroir à condition de prendre certaines précautions.

Afin d'économiser de la place tout en fixant d'autant mieux les éléments de commande à la plaque de support, les éléments des actionneurs de force intégrés à la plaque de support sont encastrés dans ladite plaque de support. On s'assure ainsi que seuls les éléments de déformation seront aptes à se déplacer.

Afin d'éviter d'avoir des déformations non uniformes selon les zones considérées sur le miroir, la plaque rigide de support est plane, de même que la plaque de support intermédiaire est plane.

Selon un mode particulier de réalisation, la commande des éléments des actionneurs de force aptes à contrôler l'intensité de la force générée est asservie électriquement.

Selon un mode particulier de réalisation, la plaque de support intermédiaire est fixée à la plaque rigide de support.

### BREVE DESCRIPTION DES DESSINS

L'invention sera mieux comprise à la lecture de la description détaillée d'un exemple non limitatif de réalisation, accompagnée de figures représentant respectivement :
la figure 1, un schéma d'un miroir déformable à actionneurs de force et raideur répartie selon un premier mode de réalisation de l'invention,
la figure 2, une vue de dessus d'une plaque d'agencement selon l'invention, et
les figures 3 à 11, des schémas d'un miroir déformable à actionneurs de force et raideur répartie selon respectivement un deuxième, un troisième, un quatrième, un cinquième, un sixième, septième, huitième et neuvième et un dixième mode de réalisation de l'invention.

### EXPOSE DETAILLE DE MODES DE REALISATION PARTICULIERS

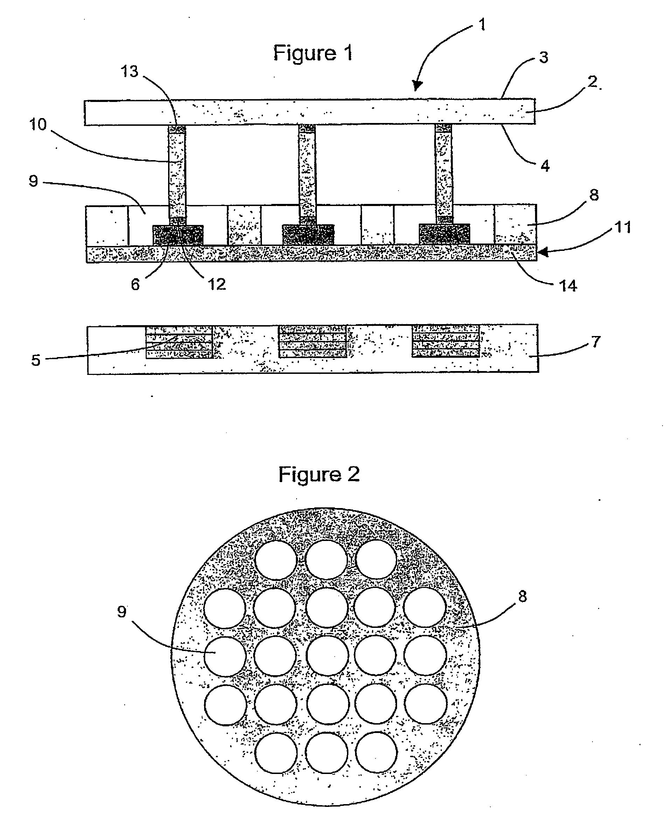

La figure 1 représente un schéma d'un miroir déformable à actionneurs de force et raideur répartie selon un premier mode de réalisation de l'invention.

Ce miroir déformable 1 est composé :
- d'une membrane déformable 2,
- d'actionneurs de force comprenant chacun un élément de commande 5 et un élément de déformation 6,
- d'une plaque de support 7,
- d'une plaque de support intermédiaire 8,
- et des liaisons comprenant
- des moyens de liaison rigide 10, et
- des moyens de liaison souple 11.

La membrane déformable 2 est un substrat optique comportant une face réfléchissante 3 et une face opposée 4. Elle est réalisée dans un matériau de type silicium et présente une épaisseur typiquement de l'ordre de 5 à 30 micromètres. Dans un autre mode de réalisation, elle est réalisée en Kapton. Un traitement de surface réfléchissant est déposé sur la face extérieure 3 pour réaliser la fonction réfléchissante. Ce traitement est adapté à l'application souhaitée.

Les éléments de commande 5 et de déformation 6 forment les actionneurs de force permettant la commande de la déformation locale de la membrane du miroir. Dans le présent mode de réalisation, les actionneurs de force sont de type électromagnétique. Les éléments de commande 5 sont ainsi des électro-aimants - par exemple des bobines en cuivre - et les éléments de déformation 6 sont des aimants permanents - par exemple en samarium/neodyme.

Chaque actionneur de force magnétique comprend ainsi un couple composé d'un électro-aimant 5 et d'un aimant permanent 6. Ce couple est apte à générer une force dont la direction est sensiblement perpendiculaire à la surface de la membrane initialement non déformée. L'aimant est apte à se déplacer suivant la direction de cette force magnétique. Pour cela, chaque électro-aimant 5 est disposé en regard de l'aimant permanent 6 auquel il est associé, suivant l'axe perpendiculaire à la surface de la membrane 2 initialement non déformée. De plus, chaque électro-aimant 5 est solidement fixé à la plaque de support 7 tandis que chaque aimant permanent 6 est seulement fixé à un moyen de liaison souple. Seul l'aimant permanent 6 est ainsi susceptible de se déplacer sous l'effet de la force magnétique résultant de l'interaction entre l'électro-aimant et l'aimant permanent.

Selon un autre mode de réalisation, c'est l'aimant permanent 6 qui est solidement fixé à la plaque de support 7 et l'électro-aimant 5 qui est fixé à un moyen de liaison souple. Seul l'électro-aimant 5 est alors susceptible de se déplacer sous l'effet de la force magnétique.

L'électro-aimant 5 est commandé en modulant le courant circulant à l'intérieur de celui-ci. Une force de Laplace est alors créée par interaction avec l'aimant permanent 6. Cette force repousse ou attire l'aimant permanent 6, ce qui entraîne son déplacement et provoque ensuite la déformation locale de la membrane 2.

Il est entendu que l'homme du métier saura adapter le présent mode de réalisation à des actionneurs de force de type non magnétique sans pour autant sortir du cadre du brevet.

La plaque de support 7 est une plaque mécanique rigide et plane. Elle peut être par exemple réalisée en aluminium ou bien encore dans un alliage aluminium/laiton.

Les électro-aimants 5 sont encastrés dans des trous percés dans la plaque de support 7. Les électro-aimants sont ainsi d'autant plus éloignés du reste des éléments constitutifs du miroir, ce qui leur permet d'encore moins subir le phénomène de dilatation thermique provoqué par le fonctionnement des électro-aimants. Dans un autre mode de réalisation, les électro-aimants 5 ne sont pas encastrés mais simplement déposés sur la plaque de support 7.

La plaque de support intermédiaire 8 est une plaque mécanique rigide et plane. Elle peut être par exemple réalisée en aluminium. Elle constitue les moyens de référence pour les aimants permanents, de sorte que ceux-ci bénéficient d'une référence fixe vis-à-vis des électro-aimants auxquels ils sont associés.

Cette plaque de support intermédiaire 8 présente un ensemble d'ouvertures 9 afin d'y agencer les aimants permanents 6. Chaque aimant permanent est disposé à l'intérieur d'une ouverture. Chaque ouverture est disposée en regard de l'électro-aimant 5 auquel l'aimant permanent 6 disposé à l'intérieur est associé, suivant l'axe perpendiculaire à la surface de la membrane 2 initialement non déformée.

Les ouvertures 9 présentent des dimensions supérieures à celles des aimants permanents 6 afin de pouvoir insérer ces derniers à l'intérieur des ouvertures. Elles présentent également une forme, identique à celle des aimants permanents, qui sont avantageusement de forme circulaire.

En référence à la figure 2, représentant une vue de dessus d'un exemple de plaque d'agencement selon l'invention, les ouvertures 9 sont disposées dans la plaque 8 suivant une forme géométrique assurant un confinement des actionneurs de force, ce qui permet de réduire la distance inter-actionneurs au sein du miroir.

Les actionneurs de force et les ouvertures sont avantageusement disposés en projection sur l'ensemble de la surface couvrant la membrane 2, selon une matrice uniformément répartie, comme représenté sur la figure 2. L'influence de chacun des actionneurs sur la déformation de chacune des zones correspondantes de la membrane est ainsi identique. La distance inter-actionneurs est typiquement de l'ordre de 2,5 millimètres. D'autres configurations des actionneurs et ouvertures sont également possibles, en particulier suivant une forme hexagonale ou cartésienne.

Chaque moyen de liaison rigide 10 est associé à un actionneur de force afin que le déplacement de l'aimant permanent soit intégralement transmis à la membrane 2 sous forme de déformation locale. Chaque moyen de liaison rigide 10 est pour cela constitué d'une tige rigide réalisée par exemple en silice. Cette tige rigide est relié à ses extrémités, d'un côté, à la face opposée 4 de la membrane 2 et, de l'autre côté, à l'aimant permanent 6 associé. Elle présente typiquement un diamètre compris entre 50 et 300 micromètres et une longueur comprise entre 50 et 5000 micromètres.

L'homme du métier remarquera que la taille des tiges rigides 10 étant beaucoup plus faible que le diamètre des aimants permanents 6, le phénomène d'empreinte sur la face réfléchissante 3 est rendu d'autant plus faible.

Afin que la transformation du déplacement de l'aimant en déformation locale de la membrane soit intégral, chaque moyen de liaison rigide 10 est fixé à la face opposée 4 de la membrane 2 au moyen d'un plot de colle souple 13 assurant un nombre de degrés de liberté suffisant pour que la membrane puisse être déformée localement. De même, chaque moyen de liaison rigide 10 est fixé au centre de l'aimant permanent 6 associé par un plot de colle rigide 12. Ainsi chaque aimant permanent 6 est lié à la membrane 2 de manière rigide, ce qui permet de maintenir fixe la distance entre le centre de l'aimant 6 et la zone de la face opposée 4 de la membrane 2 sur laquelle est collée la tige 10, assurant donc la transformation intégrale du déplacement de l'aimant en déformation locale de la membrane.

La colle utilisée pour les plots de colle rigide 12 est choisie parmi les colles présentant une faible dilatation thermique de façon à se protéger de la dissipation thermique provoquée par les électro-aimants 5. Leur faible dilatation thermique les empêche de se déformer sous l'effet Joule des électro-aimants et évite donc une déformation incontrôlable de la membrane 2. Une colle adéquate pour les plots de colle rigide 12 peut être choisie dans la famille des colles « epoxy », connues pour leur faible dilatation thermique.

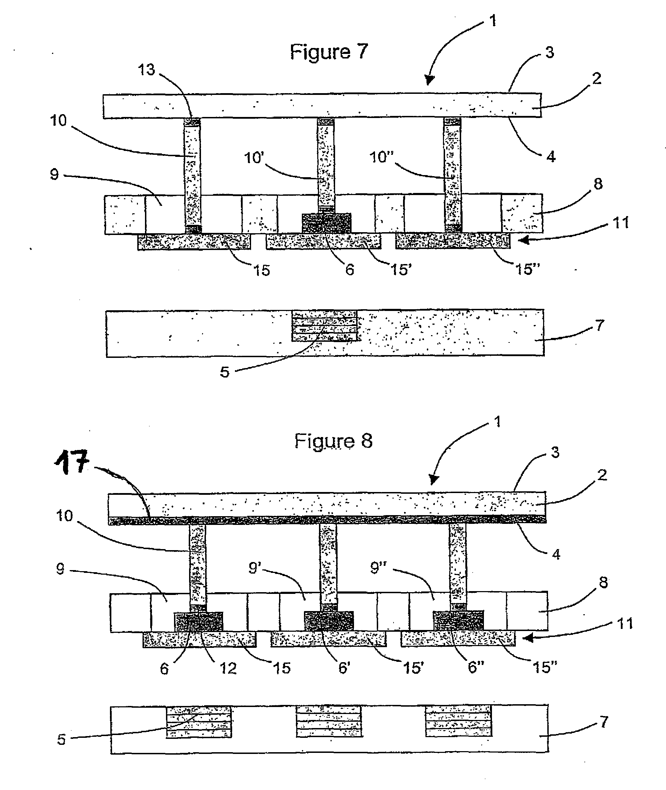

La colle utilisée pour les plots de colle souple 13 est en silicone car légèrement plus souple, ce qui permet à la membrane de se déformer en tournant un peu, tout en étant tout de même suffisamment rigide dans la direction perpendiculaire à celle de la force générée par l'actionneur pour que le déplacement de l'aimant permanent 6 soit intégralement transmis à la membrane 2. La colle souple utilisée est avantageusement uniforme pour répartir au mieux la raideur, comme évoqué dans le septième mode de réalisation décrit plus loin en référence à la figure 8.

Les aimants permanents 6 sont disposés uniquement dans les ouvertures 9 de la plaque 8, ces ouvertures présentant des dimensions supérieures à celles des aimants. Les moyens de liaison souple 11 relient ainsi la plaque d'agencement 8 et les aimants permanents 6. Ils sont constitués d'un matériau insensible au champ magnétique afin d'éviter qu'elle soit déformée sous l'effet des électro-aimants 5. Dans le présent mode de réalisation, ces moyens 11 sont constitués d'un film plastique souple 14 recouvrant entièrement la plaque d'agencement 8. Le matériau pour réaliser ce film est choisi dans la famille des silicones ou des polymères, qui présentent une forte élasticité. De la colle est disposée sur les bords et le centre de ce film, afin d'y coller l'aimant permanent et les bords de l'ouverture associée à l'aimant.

Selon un mode particulier de réalisation, le film 14 est un film réfléchissant de chaleur, ce qui permet de renvoyer la chaleur émise par les électro-aimants vers ces derniers et de disposer ainsi d'un miroir thermique.

La face supérieure du film 14 est collée contre la face inférieure de la plaque de support intermédiaire 8. Au niveau des ouvertures 9, la face supérieure du film 14 est collée contre la face inférieure des aimants permanents 6.

La rigidité supplémentaire fournie par ce film peut être paramétrée par son épaisseur et le diamètre de l'ouverture 9, à autres paramètres constants. En effet, la course diminue lorsque la quantité de matière augmente, puisque la rigidité augmente. Par ailleurs, lorsque le diamètre de l'ouverture augmente, la rigidité de la membrane diminue.

Les moyens de liaison souple 11 ainsi constitués peuvent jouer le rôle de membrane secondaire par rapport à la membrane réfléchissante 2. Sous l'effet du déplacement des aimants permanents, le film 14 va se déformer localement comme une membrane souple, et cette déformation va être transmise à la membrane réfléchissante 2 par l'intermédiaire des tiges rigides 10.

Plus précisément, dans la mesure où le film 14 est collé contre la plaque de support intermédiaire 8 aux endroits où elle ne l'est pas contre un aimant permanent 6, ce film 14 est déformé au niveau d'un aimant permanent indépendamment du reste du film disposé au niveau des autres aimants permanents. Ainsi le film 14 joue au niveau d'une ouverture 9 le rôle d'une mini membrane secondaire délimitée par cette ouverture. Chaque mini membrane peut ainsi se déformer de manière indépendante des autres mini membranes, sous l'effet du déplacement de l'aimant associé.

Tous les éléments constitutifs d'une unité d'actionnement du miroir - actionneur de force, moyens de liaison rigide et de liaison souple - présentent également l'avantage d'être facilement reproductibles, ce qui permet de faciliter une production en série par rapport à des miroirs déformables de l'art antérieur, plus complexes ou utilisant des pièces mécaniques plus difficiles à manipuler.

Lors de la réalisation industrielle du miroir déformable 1, la plaque de support 7 des électro-aimants 5 est montée dans un premier assemblage mécanique. Le reste du miroir - la membrane 2, la plaque de support intermédiaire 8 des aimants permanents 6, les moyens de liaison rigide 10 et de liaison souple 11 - sont montés dans un deuxième assemblage mécanique. Ces deux assemblages sont réalisés de manière indépendante l'un de l'autre puis solidarisés aux moyens de vis. La plaque de support 7 des électro-aimants 5 est ainsi facilement détachable du reste du miroir, de sorte à pratiquer une intervention sur celle-ci - notamment sur un des électro-aimants - sans toutefois abîmer un des autres éléments constitutifs du miroir. Dans un autre mode de réalisation, les deux assemblages pourront être entièrement et mécaniquement désolidarisés.

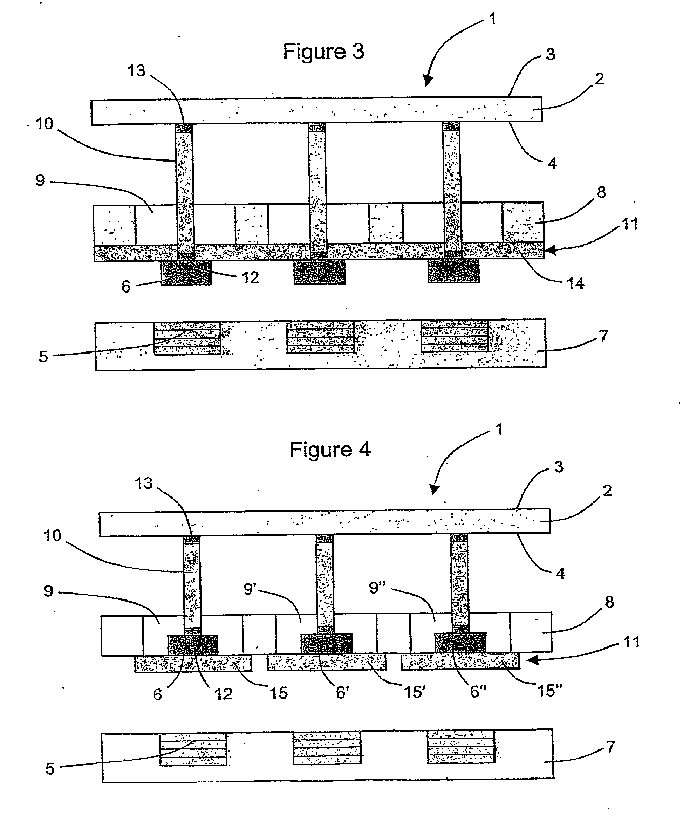

Les figures 3 à 11 représentent des schémas de différentes variantes mise en oeuvre de l'invention décrits ci-après.

Selon le deuxième mode de réalisation de l'invention représenté en figure 3, le film souple 14 n'est pas collé à la face inférieure des aimants permanents 6 mais à leur face supérieure. Les tiges rigides 10, ainsi que les plots de colle 12, transpercent le film 14. Les aimants permanents 6 ne sont ainsi plus disposés à l'intérieur des ouvertures mais à l'extérieur de ceux-ci.

Selon le troisième mode de réalisation de l'invention représenté en figure 4, les moyens de liaison souple 11 sont constitués d'un ensemble de films souples 15,15',15" dont les dimensions sont supérieures à celles des ouvertures 9 de la plaque de support intermédiaire 8. Chaque film souple est associé à une ouverture de la plaque de support intermédiaire au niveau de laquelle est disposé un aimant permanent. Chaque film souple 15,15',15" est relié, d'une part, à la plaque 8 et, d'autre part, à l'aimant permanent 6,6',6" auquel il est associé.

Le matériau pour réaliser ces mini films 15,15',15" peut être identique à celui utilisé pour réaliser le film souple 14 du premier mode de réalisation précédemment décrit, par exemple un silicone ou un polymère.

Ces films souples 15,15',15" jouent le rôle de membranes secondaires vis-à-vis de la membrane réfléchissante 2. Dans la mesure où ils sont physiquement indépendants, chaque film est déformé au niveau de l'aimant permanent auquel il est associé indépendamment des autres films. Chaque film 15,15',15" joue ainsi d'autant plus le rôle d'une mini membrane secondaire délimitée par l'ouverture 9,9',9" associée et est susceptible de se déformer de manière indépendante des autres, sous l'effet de l'aimant permanent associé.

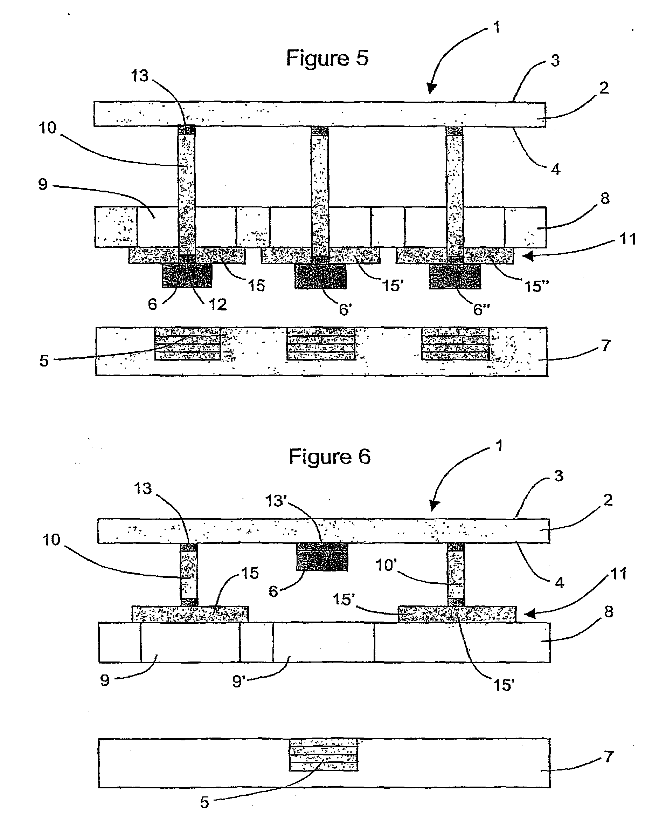

Selon le quatrième mode de réalisation de l'invention représenté en figure 5, les moyens de liaison souple 11 sont constitués d'un ensemble de films souples 15,15',15". Chaque film est collé à la face supérieure des aimants permanents 6. Les tiges rigides 10, ainsi que les plots de colle 12, transpercent le film 14. Selon un autre mode de réalisation, les tiges rigides ne transpercent pas le film.

Selon le cinquième mode de réalisation de l'invention représenté en figure 6, un aimant permanent 6 directement collé contre la membrane réfléchissante 2 via un plot de colle souple 13'. Une tige rigide 10 est fixée à un film souple 15 lui-même collé par sa face inférieure à la plaque d'agencement 8 au niveau d'une ouverture. Une autre tige rigide 10' est fixée à un film souple 15' lui-même collé par sa face inférieure à la plaque d'agencement 8 sur une zone dépourvue d'ouverture.

Selon le sixième mode de réalisation de l'invention représenté en figure 7, un aimant permanent 6 est disposé entre un moyen de liaison rigide 10' et un film souple 15' de manière identique au premier mode de réalisation de l'invention précédemment décrit Une tige rigide 10 est fixée à un film souple 15 lui-même collé par sa face supérieure à la plaque d'agencement 8 au niveau d'une ouverture. Une autre tige rigide 10" est fixée à un film souple 15" lui-même collé par sa face supérieure à la plaque d'agencement 8 au niveau d'une ouverture.

Selon le septième mode de réalisation de l'invention représenté en figure 8, les plots de colle souple 13 ont été remplacé par une couche de colle souple 17 recouvrant la face opposée 4 de la membrane 2 sur toute sa longueur. Cette disposition rend plus simple le collage des éléments contre la membrane.

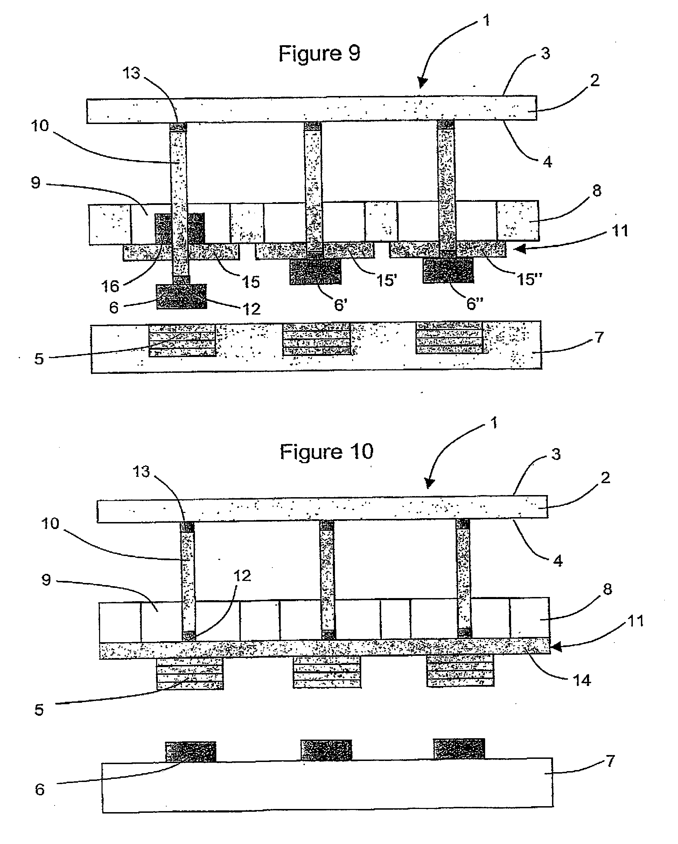

Selon le huitième mode de réalisation de l'invention représenté en figure 9, le film souple 15 n'est pas directement collé à la face supérieure de l'aimant permanent associé 6. La tige rigide 10 transperce le film 14. Afin d'assurer la stabilité de la tige rigide 10 et donc de l'aimant permanent 6, un plot de colle rigide 16 supplémentaire est disposé contre la face supérieure du film souple 15 et contre la paroi de la tige rigide 10 au-dessus du film souple 15.

Selon le neuvième mode de réalisation de l'invention représenté en figure 10, les aimant permanents 6 et les électro-aimants 5 sont inversés. Ce sont donc toujours les électro-aimants qui commande l'intensité de la force générée, mais ce sont aussi eux qui sont aptes à se déplacer sous l'effet de cette force magnétique puisqu'ils ne sont liés qu'à un moyen de liaison souple. Les aimants permanents sont eux fixés à la plaque de support 7. Ce mode de réalisation n'est cependant pas privilégié, dans la mesure où celui avec les électro-aimants fixés à la plaque de support permet d'éloigner ceux-ci du reste de la structure et d'éviter des phénomènes de dilatation thermique du fait du fonctionnement des électro-aimants.

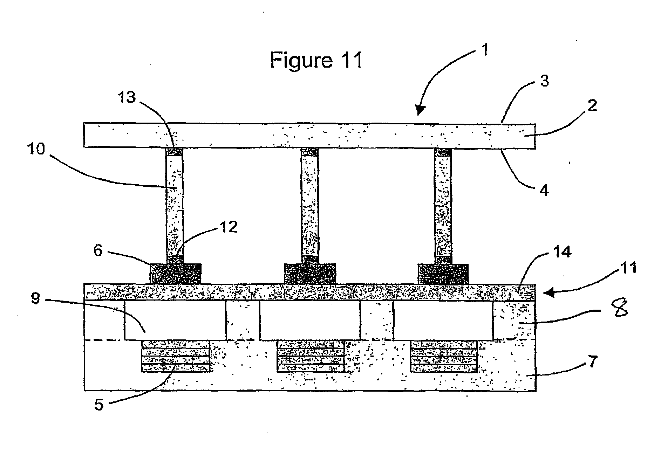

Selon le dixième mode de réalisation de l'invention représenté en figure 11, la plaque de support intermédiaire 8 est fixée à la plaque de support 7. La plaque de support intermédiaire 8 comporte des ouvertures 9 afin d'éloigner les électro-aimants du reste du miroir de sorte à limiter les conséquences du phénomène de dilatation thermique.

La structure d'un miroir déformable selon les modes de réalisation précédemment décrits de la présente invention permet d'augmenter la bande passante du miroir et de construire ainsi des miroirs déformable ayant un très grand nombre d'actionneurs. Cette structure rend de plus aisé le choix du matériau optimal de la membrane secondaire - ou des moyens de liaison souple. En effet, le diamètre de cette membrane peut être adapté pour fixer la rigidité supplémentaire. Puisque la rigidité varie en fonction du diamètre de la membrane, l'augmentation de la rigidité du miroir déformable est ainsi rendue d'autant plus simple.

Les modes de réalisation précédemment décrits de la présente invention sont donnés à titre d'exemples et ne sont nullement limitatifs. Il est entendu que l'homme du métier est à même de réaliser différentes variantes de l'invention sans pour autant sortir du cadre du brevet.

Enfin, l'invention peut aussi être mise en oeuvre pour donner une forme initiale à un miroir, par exemple avec des tiges rigides de longueur variable. Cette forme initiale donnée au miroir peut être modifiée par la suite ou fixée une fois pour toute.

## Revendications

1. Miroir déformable (1) comprenant une membrane déformable (2) avec une face extérieure réfléchissante (3) et une face opposée (4), une plaque rigide de support (7) et au moins un actionneur de force, chaque actionneur comprenant au moins deux éléments (5, 6) aptes à interagir entre eux à distance pour générer une force dans une direction sensiblement perpendiculaire à la surface de la membrane déformable (2) initialement non déformée et aptes à se déplacer l'un par rapport à l'autre suivant la direction de ladite force générée de sorte à provoquer la déformation locale de ladite membrane (2), l'un des au moins deux éléments (5, 6) étant intégré à la plaque rigide de support (7) et l'autre étant couplé à ladite membrane déformable (2), l'un desdits au moins deux éléments (5, 6) étant apte à contrôler l'intensité de ladite force générée, **caractérisé en ce que** le miroir (1) comprend également des moyens de référence qui comprennent une plaque de support intermédiaire (8) disposée entre la membrane (2) et la plaque rigide de support (7) et qui sont couplés à ladite membrane déformable (2) par une pluralité de liaisons comprenant chacune au moins un moyen de liaison souple (11) et au moins un moyen de liaison rigide (10), tel qu'une tige, dont la raideur est supérieure à celle de ladite laison souple, chaque moyen de liaison rigide (10) étant lié à ladite membrane déformable (2), chaque moyen de liaison souple (11) étant au moins en partie lié à la plaque de support intermédiaire (8), et ladite plaque de support intermédiaire (8) étant commune à ladite pluralité de liaisons (10, 11), l'un des au moins deux éléments (5, 6) de l'actionneur de force apte à contrôler l'intensité de la force générée étant intégré à la plaque rigide de support (7).

2. Miroir déformable (1) selon la revendication 1, dans lequel l'élément de l'actionneur de force (5, 6) apte à contrôler l'intensité de la force générée est un électro-aimant (5) et dans lequel l'élément de l'actionneur de force (5, 6) apte à interagir à distance avec l'élément apte à contrôler l'intensité de la force générée est un aimant permanent (6, 6', 6").

3. Miroir déformable (1) selon la revendication 2 dans lequel les moyens de liaison souple (11) sont constitués d'un matériau insensible au champ magnétique.

4. Miroir déformable (1) selon l'une des revendications précédentes, dans lequel la plaque de support intermédiaire (8) comporte un ensemble d'ouvertures (9), au moins un élément d'un actionneur de force (5,6) étant couplé à au moins l'une des ouvertures (9), et dans lequel au moins un moyen de liaison souple (11) est disposé au niveau d'une ouverture (9) et fixé à l'élément de l'actionneur de force (5, 6) couplé à l'ouverture (9).

5. Miroir déformable (1) selon l'une des revendications précédentes, dans lequel la plaque de support intermédiaire (8) comporte un ensemble d'ouvertures (9), au moins un élément d'un actionneur de force (5,6) étant couplé à au moins l'une des ouvertures (9), et dans lequel au moins un moyen de liaison rigide (10) est disposé au niveau d'une ouverture (9) et fixé par une extrémité à la face opposée (4) de la membrane (2) et par une autre extrémité à l'élément de l'actionneur de force (5, 6) couplé à l'ouverture (9), ou fixé à un moyen de liaison souple (11) disposé au niveau d'une ouverture (9).

6. Miroir déformable (1) selon l'une des revendications précédentes, dans lequel la plaque de support intermédiaire (8) comporte un ensemble d'ouvertures (9), au moins un élément d'un actionneur de force (5,6) étant couplé à au moins l'une des ouvertures (9), et dans lequel dans lequel au moins un moyen de liaison souple (11) est disposé au niveau d'une ouverture (9) et présente des dimensions supérieures à celles de l'ouverture (9).

7. Miroir déformable (1) selon l'une des revendications précédentes, dans lequel la plaque de support intermédiaire (8) comporte un ensemble d'ouvertures (9), au moins un élément d'un actionneur de force (5,6) étant couplé à au moins l'une des ouvertures (9), et dans lequel les moyens de liaison souple (11) jouent au niveau des ouvertures (9) le rôle de mini-membranes secondaires pouvant se déformer chacune indépendamment des autres et dont la déformation est transmise à la membrane réfléchissante (2) par l'intermédiaire des moyens de liaison rigide (10).

8. Miroir déformable selon les revendications 2 et 7 **caractérisé en ce qu'**il comporte des actionneurs (5, 6) dont les éléments de déformation sont des aimants permanents (6, 6', 6") fixés aux mini-membranes secondaires, de telle sorte que chaque mini-membrane secondaire peut se déformer sous l'effet du déplacement de l'aimant permanent à laquelle elle est associée, lorsque ledit aimant permanent est repoussé ou attiré par l'électro-aimant (5).

9. Miroir déformable (1) selon la revendication 8 **caractérisé en ce que** les aimants permanents (6) sont disposés à l'extérieur des ouvertures (9), les mini-membranes secondaires étant de préférence collées à la face supérieure desdits aimants permanents.

10. Miroir déformable (1) selon l'une l'une des revendications précédentes, dans lequel la plaque de support intermédiaire (8) comporte un ensemble d'ouvertures (9) et dans lequel au moins un élément d'au moins un actionneur de force (5,6) est couplé à une ouverture (9) et présente des dimensions inférieures à celles de ladite ouverture (9).

11. Miroir déformable (1) selon l'une quelconque des revendications précédentes, dans lequel les moyens de liaison souple (11, 11' ,11") comprennent au moins un film souple (14, 15, 15', 15"), par exemple en silicone ou en polymère, revêtu d'un matériau adhésif.

12. Miroir déformable (1) selon la revendication 11 **caractérisé en ce que** le film souple (14) est collé contre la plaque de support intermédiaire (8), de préférence contre la face inférieure de cette dernière.

13. Miroir déformable (1) selon l'une quelconque des revendications précédentes, dans lequel les moyens de liaison souple (11) disposés d'un même côté des moyens de référence (8) sont constitués d'un film souple (14, 15) couvrant l'ensemble desdits moyens de liaison souple (11).

14. Miroir déformable (1) selon l'une quelconque des revendications précédentes dans lequel la plaque rigide de support (7) est montée dans un premier assemblage mécanique et dans lequel la plaque de support intermédiaire (8), les moyens de liaison rigide (10) et les moyens de liaison souple (11) sont montés dans un deuxième assemblage mécanique réalisé indépendamment du premier assemblage, de telle sorte que la plaque rigide de support (7) est facilement détachable du reste du miroir.

## Patentansprüche

1. Deformierbarer Spiegel (1), umfassend eine deformierbare Membran (2) mit einer reflektierenden Seite (3) und einer gegenüberliegenden Seite (4), eine steife Stützplatte (7) und mindestens ein Kraftstellglied, wobei jedes Kraftstellglied mindestens zwei Elemente (5, 6) umfasst, die geeignet sind, miteinander in einem Abstand zu interagieren, um eine Kraft in eine Richtung im Wesentlichen senkrecht auf die Oberfläche der deformierbaren Membran (2), die ursprünglich nicht deformiert ist, zu erzeugen, und die geeignet sind, sich zueinander in die Richtung der erzeugten Kraft zu verschieben, um die lokale Deformation der Membran (2) hervorzurufen, wobei mindestens eines der beiden Elemente (5, 6) in die steife Stützplatte (7) integriert ist, und das andere mit der deformierbaren Membran (2) gekoppelt ist, wobei mindestens eines der beiden Elemente (5, 6) geeignet ist, die Stärke der erzeugten Kraft zu kontrollieren, **dadurch gekennzeichnet, dass** der Spiegel (1) auch Referenzmittel umfasst, die eine Zwischenstützplatte (8) aufweisen, die zwischen der Membran (2) und der steifen Stützplatte (7) angeordnet und mit der deformierbaren Membran (2) durch eine Vielzahl von Verbindungen gekoppelt sind, jeweils umfassend mindestens ein flexibles Verbindungsmittel (11) und mindestens ein steifes Verbindungsmittel (10), wie eine Stange, deren Steifigkeit größer als jene der flexiblen Verbindung ist, wobei jedes steife Verbindungsmittel (10) mit der deformierbaren Membran (2) verbunden ist, wobei jedes flexible Verbindungsmittel (11) zumindest teilweise mit der Zwischenstützplatte (8) verbunden ist, wobei die Zwischenstützplatte (8) der Vielzahl von Verbindungen (10, 11) gemeinsam ist, wobei mindestens eines der beiden Elemente (5, 6) des Kraftstellgliedes, das geeignet ist, die Stärke der erzeugten Kraft zu kontrollieren, in die steife Stützplatte (7) integriert ist.

2. Deformierbarer Spiegel (1) nach Anspruch 1, bei dem das Element des Kraftstellgliedes (5, 6), das geeignet ist, die Stärke der erzeugten Kraft zu kontrollieren, ein Elektromagnet (5) ist, und bei dem das Element des Kraftstellgliedes (5, 6), das geeignet ist, im Abstand mit dem Element zur Kontrolle der Stärke der erzeugten Kraft zu interagieren, ein Dauermagnet (6, 6', 6") ist.

3. Deformierbarer Spiegel (1) nach Anspruch 2, bei dem die flexiblen Verbindungsmittel (11) aus einem für das Magnetfeld unempfindlichen Material gebildet sind.

4. Deformierbarer Spiegel (1) nach einem der vorhergehenden Ansprüche, bei dem die Zwischenstützplatte (8) eine Gruppe von Öffnungen (9) umfasst, wobei mindestens ein Element eines Kraftstellgliedes (5, 6) mit mindestens einer der Öffnungen (9) gekoppelt ist, und bei dem mindestens ein flexibles Verbindungsmittel (11) im Bereich einer Öffnung (9) angeordnet und an dem Element des Kraftstellgliedes (5, 6), das mit der Öffnung (9) gekoppelt ist, befestigt ist.

5. Deformierbarer Spiegel (1) nach einem der vorhergehenden Ansprüche, bei dem die Zwischenstützplatte (8) eine Gruppe von Öffnungen (9) umfasst, wobei mindestens ein Element des Kraftstellgliedes (5, 6) mit mindestens einer der Öffnungen (9) gekoppelt ist, und bei dem mindestens ein starres Verbindungsmittel (10) im Bereich einer Öffnung (9) angeordnet und mit einem Ende an der gegenüberliegenden Flache (4) der Membran (2) und mit einem anderen Ende an dem Element des Kraftstellgliedes (5, 6), das mit der Öffnung (9) gekoppelt ist, befestigt ist oder an einem flexiblen Verbindungsmittel (11), das im Bereich einer Öffnung (9) angeordnet ist, befestigt ist.

6. Deformierbarer Spiegel (1) nach einem der vorhergehenden Ansprüche, bei dem die Zwischenstützplatte (8) eine Gruppe von Öffnungen (9) umfasst, wobei mindestens ein Element eines Kraftstellgliedes (5, 6) mit mindestens einer der Öffnungen (9) gekoppelt ist, und bei dem mindestens ein flexibles Verbindungsmittel (11) im Bereich einer Öffnung (9) angeordnet ist und größere Abmessungen als jene der Öffnung (9) aufweist.

7. Deformierbarer Spiegel (1) nach einem der vorhergehenden Ansprüche, bei dem die Zwischenstützplatte (8) eine Gruppe von Öffnungen (9) umfasst, wobei mindestens ein Element eines Krattstellgliedes (5, 6) mit mindestens einer der Öffnungen (9) gekoppelt ist, und bei dem die flexiblen Verbindungsmittel (11) im Bereich der Öffnungen (9) die Rolle von Mini-Nebenmembranen spielen, die sich jeweils unabhängig voneinander deformieren können, und deren Deformation auf die reflektierende Membran (2) mit Hilfe der starren Verbindungsmittel (10) übertragen wird.

8. Deformierbarer Spiegel nach den Ansprüchen 2 und 7, **dadurch gekennzeichnet, dass** er Kraftstellglieder (5, 6) umfasst, deren Deformationselemente Dauermagneten (6, 6', 6") sind, die an den Mini-Nebenmembranen befestigt sind, so dass sich jede Mini-Nebenmembran unter der Wirkung der Verschiebung des Dauermagneten, mit dem sie verbunden ist, deformieren kann, wenn der Dauermagnet vom Elektromagneten (5) abgestoßen oder angezogen wird.

9. Deformierbarer Spiegel (1) nach Anspruch 8, **dadurch gekennzeichnet, dass** die Dauermagneten (6) außerhalb der Öffnungen (9) angeordnet sind, wobei die Mini-Nebenmembranen vorzugsweise an die Oberseite der Dauermagneten geklebt sind.

10. Deformierbarer Spiegel (1) nach einem der vorhergehenden Ansprüche, bei dem die Zwischenstützplatte (8) eine Gruppe von Öffnungen (9) umfasst, und bei dem mindestens ein Element mindestens eines Kraftstellgliedes (5, 6) mit einer Öffnung (9) gekoppelt ist und kleinere Abmessungen als jene der Öffnungen (9) aufweist.

11. Deformierbarer Spiegel (1) nach irgendeinem der vorhergehenden Ansprüche, bei dem die flexiblen Verbindungsmittel (11, 11', 11") mindestens eine flexible Folie (14, 15, 15', 15") beispielsweise aus Silikon oder Polymer umfassen, die mit einem Haftmaterial überzogen ist.

12. Deformierbarer Spiegel (1) nach Anspruch 11, **dadurch gekennzeichnet, dass** die flexible Folie (14) an die Zwischenstützplatte (8), vorzugsweise an die Innenseite dieser letztgenannten, geklebt ist.

13. Deformierbarer Spiegel (1) nach irgendeinem der vorhergehenden Ansprüche, bei dem die flexiblen Verbindungsmittel (11), die auf einer selben Seite der Referenzmittel (8) angeordnet sind, von einer flexiblen Folie (14, 15) gebildet sind, die die Gruppe der flexiblen Verbindungsmittel (11) bedeckt.

14. Deformierbarer Spiegel (1) nach irgendeinem der vorhergehenden Ansprüche, bei dem die starre Stützplatte (7) in einer ersten mechanischen Anordnung montiert ist, und bei dem die Zwischenstützplatte (8), die starren Verbindungsmittel (10) und die flexiblen Verbindungsmittel (11) in einer zweiten mechanischen Anordnung montiert sind, die unabhängig von der ersten Anordnung hergestellt ist, so dass die starre Stützplatte (7) vom übrigen Spiegel einfach lösbar ist.

## Claims

1. A deformable mirror (1) comprising a deformable membrane (2) with a reflective outer face (3) and an opposite face (4), a rigid support plate (7), and at least one force actuator, each actuator comprising at least two elements (5, 6) suitable for interacting with each other remotely so as to generate a force in a direction that is substantially perpendicular to the deformable surface of the initially non-deformed membrane (2), and suitable for being displaced relative to each other in the direction of said generated force so as to cause said membrane (2) to be deformed locally, one of the at least two elements (5, 6) being incorporated into the rigid support plate (7) and the other element being coupled to said deformable membrane (2), one of said at least two elements (5, 6) being suitable for controlling the intensity of said generated force, said deformable mirror (1) being **characterized in that** the mirror (1) further comprises reference means which comprise an intermediate support plate (8) disposed between the membrane (2) and the rigid support plate (7) and which are coupled to said deformable membrane (2) via a plurality of links, each of which comprises at least one flexible link means (11) and at least one rigid link means (10), such as a rod, which stiffness is greater than the stiffness of said flexible link, each rigid link means (10) being connected to said deformable membrane (2), each flexible link means (11) being connected at least in part to the intermediate support plate (8) and said intermediate support plate (8) being common to said plurality of links (10, 11), one of at least two elements (5, 6) of the force actuator that is suitable for controlling the generated force being incorporated into the rigid support plate (7).

2. A deformable mirror (1) according to claim 1, wherein the force actuator element (5, 6) suitable for controlling the intensity of the generated force is an electromagnet and wherein the element of the force actuator (5, 6) that is suitable for remotely interacting with the element suitable for controlling the generated force is a permanent magnet.

3. A deformable mirror (1) according to claim 2 wherein the flexible link means (11) are made of a material that it is insensitive to magnetic field.

4. A deformable mirror (1) according to any preceding claims, wherein the intermediate support plate (8) is provided with a set of openings (9), at least one element of a force actuator (5, 6) being coupled to at least one of the openings (9) and wherein at least one flexible link means (11) is disposed at an opening (9) and is fastened to the element of at least one force actuator (5, 6) that is coupled to the opening (9).

5. A deformable mirror (1) according to any preceding claims, wherein the intermediate support plate (8) is provided with a set of openings (9), at least one element of a force actuator (5, 6) being coupled to at least one of the openings (9) and wherein at least one rigid link means (10) is disposed at an opening (9) and is fastened via one end to the opposite face (4) of the membrane (2) and via another end to the element of at least one force actuator (5, 6) that is coupled to the opening (9) or fixed at one flexible link means (11) disposed at an opening (9).

6. A deformable mirror (1) according to any preceding claims, wherein the intermediate support plate (8) is provided with a set of openings (9), at least one element of a force actuator (5, 6) being coupled to at least one of the openings (9) and wherein at least one flexible link means (11) is disposed at an opening (9) and is of size greater than the size of the opening (9).

7. A deformable mirror (1) according to any preceding claims, wherein the intermediate support plate (8) is provided with a set of openings (9), at least one element of a force actuator (5, 6) being coupled to at least one of the openings (9) and wherein the flexible link means (11) play at openings (9) the role of mini secondary membranes likely to deform each independently from the other and which deformation is transmitted to the reflective membrane (2) via rigid link means (10).

8. A deformable mirror (1) according to any preceding claims, wherein it comprises actuator means (5, 6) whose elements of deformation are permanent magnets (6, 6', 6") fixed to the mini secondary membranes so that each mini secondary membrane can be deformed under the effect of the displacement of the permanent associated magnet when said permanent magnet is repelled or attracted by the electro-magnet (5).

9. A deformable mirror (1) according to any preceding claims, wherein the permanent magnets (6) are disposed outside the opening (9), the mini secondary membranes being preferably bonded to the top face of said permanent magnets.

10. A deformable mirror (1) according to any preceding claims, wherein the intermediate support plate (8) is provided with a set of openings (9), at least one element of a force actuator (5, 6) being coupled to at least one of the openings (9) and wherein at least one element of at least one force actuator (5, 6) that is coupled to an opening (9) is of size smaller than the size of the opening (9).

11. A deformable mirror (1) according to any preceding claims, wherein the flexible link means (11, 11', 11") comprise at least one flexible film (14, 15', 15"), for example a silicone or a polymer, covered with an adhesive material.

12. A deformable mirror (1) according to any preceding claims wherein the flexible film (14) is bonded to the intermediary support plate (8), preferably to its bottom face.

13. A deformable mirror (1) according to any preceding claims, wherein the flexible link means (11) that are disposed on the same side of the reference means (7, 8) are constituted by a flexible film (15) covering all of said flexible link means (11).

14. A deformable mirror (1) according to any preceding claims wherein the rigid support plate (7) is mounted in a first mechanical assembly and wherein the intermediary support plate (8), the rigid link means (10) and the flexible link means (11) are mounted in a second mechanical assembly formed independently from the first assembly so that the rigid support plate (7) is easily detachable from the remainder of the mirror.
